# EUROPEAN PATENT SPECIFICATION

(11) **EP 1 902 107 B1**
(45) Date of publication and mention of the grant of the patent: **15.12.2010**
(21) Application number: 06735439.9
(22) Date of filing: 17.02.2006
(51) Int. Cl.: C09D 11/00

(54) **METHOD FPR APPLYING INK-JETTABLE FLAVORED AND COLORED FLUIDS ON EDIBLE SUBSTRATES**
METHODE ZUM AUFDRUCKEN VON GESCHMACKS- UND FARB-FLUIDEN AUF VERZEHRBARE SUBSTRATE
METHODE POUR APPLIQUER DES FLUIDES AROMATISES ET COLORES PAR IMPRESSION JET D'ENCRE SUR DES SUBSTRATS COMESTIBLES

(30) Priority: 01.07.2005 US 696045 P
(43) Date of publication of application: 26.03.2008
(60) Divisional application: 10011401.6
(73) Proprietor: SENSIENT IMAGING TECHNOLOGIES INC., Escondido, CA 92025-4918 (US)
(72) Inventor: BAYDO, Robert, San Marcos, CA 92069 (US); GRAFF, Diane, Escondido, CA 92025 (US); SHAAL, Andrea, St. Louis, Missouri 63104 (US); LONG, John, Carmel, Indiana 46032 (US); DINH, Tony, San Diego, California 92131 (US)
(74) Representative: Dauncey, Mark Peter
(86) International application number: PCT/US2006/005777
(87) International publication number: WO 2007/005063

(56) References cited:
- WO-A-02/085995
- WO-A-2006/023615
- US-A1- 2004 086 603

## Description

Ink-jet printing has the potential to revolutionize the food industry by providing a novel way to apply ink-jettable fluids to the surfaces of food items. The present invention provides a method of applying an edible flavor image to an edible substrate comprising ink jet printing a food grade flavored fluid and a separate food grade colored fluid onto an edible substrate to create an edible flavor image thereon. This invention provides an economical and efficient way to impart flavor to edible substrates using ink-jet ink technology. Subject-matter of the present invention are methods according to claims 1-14. Embodiments described herein and not falling under the claims merely serve to illustrate the invention.

Described below are food grade flavored fluids for use in printing on edible substrates, methods for applying the food grade flavored fluids directly to edible substrates, and edible substrates having the flavored fluids applied thereto. The food grade flavored fluids are typically made from food grade flavors and glycols and optionally water and/or glycerine. The food grade flavored fluids have characteristics that render them suitable for printing directly onto the surfaces of a variety of edible substrates. Formulations of the present invention should be or have at least one of the following: food grade ingredients; compatibility with the food surfaces onto which they will be applied; and properties (e.g., viscosities, surface tensions, smear resistance, solubilities, drying times) that make them suitable for use with ink-jet printers. The food grade flavored fluids are suitable for use with a variety of ink-jet printers, such as Continuous Ink Jet (CIJ)5 Drop-on-Demand Valve (DoD Valve), Drop-on-Demand Piezo-Electric (DoD Piezo) and Thermal Ink Jet (TIJ). In particular, the food grade flavored fluids are suitable for printing with a variety of piezo and thermal printheads.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items.

As used herein, "food grade" means that up to specified amounts of the flavored fluids or individual ingredients making up the flavored fluid can be ingested by a human without generally causing deleterious health effects. Therefore, in order to meet the standard of a "food grade" flavored fluid, the flavored fluid should be free or substantially free of ingredients that generally cause deleterious health effects when ingested by a human. When such ingredients are present, e.g., in trace amounts through contamination, those ingredients should be present in amounts below those that would result in the deleterious health effects. Examples of food grade ingredients include those ingredients "generally recognized as safe" ("GRAS") by the United States Food and Drug Administration ("FDA") and flavors approved by the FDA for use in foods for human consumption. In particular, food safe ingredients include those ingredients listed as approved under 21 C.F.R. §§ 172.510, 172.515, 172.520, 172.530, 172.535, 172.575, 172.580 and 172.585.

A wide variety of edible substrates may be employed. As used herein, "edible substrate" or "substrate" includes any material suitable for consumption that is capable of having a flavor disposed thereon. Examples of edible substrates onto which the food grade flavored fluids may be printed include snack chips (e.g., sliced potato chips), fabricated snacks (e.g., fabricated chips such as tortilla chips, potato chips, potato crisps), extruded snacks, cookies, cakes, chewing gum, candy, various bread products (e.g., biscuits, toast, buns, bagels, and tortillas), fruit, dried fruit, beef jerky, crackers, pasta, hot dogs, sliced meats, cheese, pancakes, waffles, dried fruit film, breakfast cereals, toaster pastries, ice cream cones, ice cream, gelatin, ice cream sandwiches, ice pops, yogurt, desserts, cheese cake, pies, cup cakes, English muffins, pizza, pies, meat patties, and fish sticks. Although any substrate may be combined with any food grade flavored fluid, some substrates may be more compatible than others with a particular food grade flavored fluid. In one embodiment, the edible substrate excludes edible films.

The surface of the edible substrate onto which the food grade flavored fluids are applied may be a porous surface which facilitates the absorption of the food grade flavored fluids by the surface, hastening drying. As used herein, the term "porous surface" is intended to include any surface having sufficient porosity to allow the food grade flavored fluids to be at least partially absorbed. The food grade flavored fluids may also be applied to nonporous edible surfaces, including gelcapsules, gelatin-based roll-ups and other semi to nonporous materials. An optional drying step may be employed when applying to nonporous edible substrates, after the flavored fluid has been applied. Although the above substrates are typically associated with human consumption, it should be understood that any substrate fit for human or animal consumption may be used. Additional examples may include dog bones and dog biscuits.

The food grade flavored fluids may comprise food grade glycol, which acts as a solvent and may account for a large part of the flavored fluid. For example, the food grade glycol may account for at least about 10 wt. % of the flavored fluid. This includes embodiments where the food grade glycol accounts for at least about 25 wt. % of the flavored fluid, further includes embodiments where the food grade glycol accounts for at least about 40 wt. % of the flavored fluid, still further includes embodiments where the food grade glycol accounts for at least about 70 wt. % of the flavored fluid, and even further includes embodiments where the food grade glycol accounts for at least about 85 wt. % of the flavored fluid. Examples of the food grade glycol include 1,2-propanediol, propylene glycol, and combinations thereof. Optionally, food grade thickeners such as sugar syrup, potassium tricitrate, hydroxypropyl methylcellulose, carboxymethylcellulose (e.g., Akucell AF1705 from Akzo Nobel), and hydroxypropylcellulose (e.g., Klucel EF from Hercules Inc.) may be used in addition to the food grade glycols or as a partial or complete replacement for the food grade glycols in the flavored fluid.

Glycerine, water, or a mixture of glycerine and water, may optionally be used as co-solvents along with the food grade glycol. Glycerine provides low volatility and may assist in solubilizing some of the food grade flavors. As such, glycerine helps prevent the food grade flavors from solidifying out of solution, crusting onto and clogging jetting nozzles. When glycerine is used as a co-solvent, it is typically present in an amount of at least about 1 wt. % of the food grade flavored fluid. This includes embodiments where glycerine is present in an amount of at least about 10 wt. %, further includes embodiments where glycerine is present in an amount of at least about 20 wt. %, still further includes embodiments where the glycerine is present in an amount of at least about 30 wt. %, and even further includes embodiments where the glycerine is present in an amount of at least about 45 wt. %. The amount of glycerin present, if any, will depend on a variety of factors, including the extent to which the food grade flavors are soluble in the food grade glycols. Thus, some of the flavored fluids may contain a relatively small amount of glycerine (e.g. about 2 to 10 wt. %) and others may contain a larger amount of glycerine (e.g. about 30 to 45 wt. %). In still other embodiments, glycerine is present in intermediate quantities (e.g. about 12 to 18 wt. %). In one exemplary embodiment, the food grade flavored fluids contain at least about 70 wt. % 1,2-propanediol, glycerine or a mixture thereof.

The food grade flavored fluids may comprise up to about 90 wt. % water, depending upon the type of ink jet method employed. The food grade flavored fluids may be prepared with a relatively high water content. For example, in some embodiments the flavored fluids may contain at least about 50 wt. % water. This includes embodiments where the flavored fluids contains at least about 65 wt. % water, and further includes embodiments where the flavored fluids may contain at least about 75 wt. % water. Food grade flavored fluids having a relatively high water content are particularly suited to valve jet printing methods. In one exemplary embodiment, the food grade flavored fluid comprises about 50 to 90 wt. % water.

The food grade flavored fluids may also be prepared with a low water content. For example, in some embodiments the flavored fluids may contain no more than about 35 wt. % water. This includes embodiments where the flavored fluids contain no more than about 20 wt. % water, and further includes embodiments where the flavored fluids contain no more than about 5 wt. % water. The food grade flavored fluids may be free of or substantially free of water, e.g., having a water content of no more than about 1 wt. %. In these compositions, water can be added, water may be due solely or partially to water absorbed from the air under humid conditions and/or water may be introduced as an impurity or minor component of one of the solvents or additives that make up the flavored fluids. It is advantageous to limit the amount of water present in the flavored fluids because a high water content tends to decrease the viscosity of the fluids, rendering them less suitable for use in some printing applications, such as ink-jet printing applications where elevated jetting temperatures are used. In one exemplary embodiment, the food grade flavored fluids contain about 25 to 95 wt. % 1,2-propanediol, about 3 to 40 wt. % glycerine and no more than about 35 wt. % water.

The food grade flavors used to produce the food grade flavored fluids may be synthetic or artificial flavors, natural flavors or any mixture thereof. The food grade flavors may include any flavors which are soluble in at least one of a food grade glycol, glycerine, water, or mixtures thereof. Examples of suitable flavors include almond, amaretto, apple, green apple, apple-cherry-berry, apple-honey, apricot, bacon, balls of fire, banana, barbeque, beef, roast beef, beef steak, berry, berry blue, birch beer/spruce beer, blackberry, bloody mary, blueberry, boysenberry, brandy, bubble bum, butter, butter pecan, buttermilk, butterscotch, candy corn, cantaloupe, cantaloupe lime, caramel, carrot, cassia, caviar, celery, cereal, champagne, cherry, cherry cola, cherry maraschino, wild cherry, black cherry, red cherry, cherry-cola, chicken, chocolate, chocolate almond, cinnamon spice, citrus, citrus blend, citrus-strawberry, clam, cocoa, coconut, toasted coconut, coffee, coffee almond, cola, cola-vanilla, cookies & cream, cool, cotton candy, cranberry, cranberry-raspberry, cream, cream soda, dairy type cream, crème de menthe, cucumber, black currant, dulce de leche, egg nog, pork fat, type fat, anchovy fish, herring fish, sardine fish, frankfurter, fiery hot, fried garlic, sautéed garlic, gin, ginger ale, ginger beer, graham cracker type, grape, grape grapefruit, grapefruit-lemon, grapefruit-lime, grenadine, grill, guarana, guava, hazelnut, honey, hot, roasted honey, ice cream cone, jalapeno, key lime, kiwi, kiwi-banana, kiwi-lemon-lime, kiwi-strawberry, kola champagne, lard type, lemon, lemon custard, lemonade, pink lemonade, lemon-lime, lime, malt, malted milk, mango, mango-pineapple, maple, margarita, marshmallow, meat type, condensed milk, cooked milk, mint, mirepoix, mocha, mochacinna, molasses, mushroom, sautéed mushroom, muskmelon, nectarine, neopolitan, green onion, sautéed onion, orange, orange cordial, orange creamsicle, orange crème, orange peach mango, orange strawberry banana, creamy orange, mandarin orange, orange-passion-guava, orange-pineapple, papaya, passion fruit, peach, peach-mango, peanut, roasted peanut, pear, pecan danish type, pecan praline, pepper, peppermint, pimento, pina colada, pina colada/pineapple-coconut, pineapple, pineapple-orange, pistachio, pizza, pomegranate, pork fat type, baked potato, prune, punch, citrus punch, tropical punch, cherry fruit punch, grape punch, raspberry, black raspberry, blue raspberry, red raspberry, raspberry-blackberry, raspberry-ginger ale, raspberry-lime, roast type, root beer, rum, sangria, sarsaparilla, sassafras, sausage, sausage pizza, savory, seafood, shrimp, hickory smoke, mesquite smoke, sour, sour cream, sour cream and onion, spearmint, spicy, strawberry, strawberry margarita, jam type strawberry, strawberry-kiwi, burnt sugar, sweet, supersweet, sweet & sour, tallow, tamarind, tangerine-lime, tangerine, tea, tequila type, toffee, triple sec, tropical fruit mix, turkey, tutti frutti, vanilla, vanilla cream, vanilla custard, french vanilla, vegetable, vermouth, vinegar, balsamic vinegar, watermelon, whiskey, wildberry, wine, and yogurt. Other examples of flavors are found in 21 C.F.R. §§ 172.510, 172.515, 172.520, 172.530, 172.535, 172.575, 172.580 and 172.585, which are hereby fully incorporated by reference. A variety of food grade flavors are commercially available from Sensient Flavors Inc. in Indianapolis, Indiana, Givaudan SA in Cincinnati, Ohio, and International Flavors & Fragrance in New York, New York.

The relative amount of the food grade flavors used in the food grade flavored fluids may vary depending on the desired flavor and the intensity of the flavor. In some embodiments, the food grade flavored fluids will typically contain at least about 0.1 wt. % food grade flavor which includes other embodiments containing at least about 0.5 wt. %. In some embodiments, the flavored fluids contain less than about 20.0 wt. %, in others less than about 10.0 wt. %, and in others less than about 5.0 wt. %. This includes embodiments where the flavored fluids contain about 0.5 to 7.5 wt. %, and further includes embodiments where the flavored fluids contain about 0.5 to 5 wt. % food grade flavor. Preferably the flavored fluids contain about 0.1 to 10.0 wt. % food grade flavor.

In addition to the food grade flavors and glycols and any optional glycerine and/or water co-solvents, the food grade flavored fluids may comprise other food grade additives such as surface tension modifiers, thickening agents, antioxidants, preservatives, buffering agents, and anti-microbial agents. These additional additives will typically be present only in small quantities. For example, these additional food grade additives may be present in amounts of no more than about 10 wt. % of the flavored fluid. This includes embodiments where the food grade additives are present in amounts of no more than about 5 wt. % and further includes embodiments where the food grade additives are present in amounts of no more than about 3 wt. %. Examples of additives include sodium dioctyl sulfosuccinate, sodium laurel sulfate, sodium laureth sulfate, sugar syrup, potassium tricitrate, hydroxypropyl methylcellulose, carboxymethylcellulose (e.g., Akucell AFI 705 from Akzo Nobel), hydroxypropylcellulose (e.g., Klucel EF from Hercules Inc.), butylated hydroxyanisole (BHA), butylated hydroxytoluene (BHT), [pi]-propyl gallate (PG), ascorbic acid (Vitamin C), sodium ascorbate, calcium ascorbate, tocopherols (e.g., extracted from cereals, oilseeds, nuts, and vegetables), spice extracts (e.g., clove, sage, oregano, rosemary, and allspice), methylparaben, propylparaben, sodium benzoate, and citric acid. Additional additives can be found in 21 C.F.R. [section] 172.5, which is hereby fully incorporated by reference. Additives may be used individually or in combination.

While the present invention relates to applying edible flavour images by ink jet printing a food grade flavoured fluid and a separate food grade coloured fluid, the food grade flavor fluid additives may also include synthetic dyes, natural dyes, or combinations thereof. As used herein, the term "dye" denotes dyes which are soluble in water and/or in the other co-solvents, comprising substantial amounts of glycols and/or glycerine, employed in the present flavored fluids. Suitable synthetic dyes for use in the present flavored fluids include food grade FD&C dyes, such as FD&C Red #3, FD&C Red #40, FD&C Yellow #5, FD&C Yellow #6, FD&C Blue #1, and FD&C Green #3, and their corresponding lakes. Suitable natural dyes include turmeric oleoresins, caramel color, cochineal glycerine, employed in the present flavored fluids. Suitable synthetic dyes for use in the present flavored fluids include food grade FD&C dyes, such as FD&C Red #3, FD&C Red #40, FD&C Yellow #5, FD&C Yellow #6, FD&C Blue #1, and FD&C Green #3, and their corresponding lakes. Suitable natural dyes include turmeric oleoresins, caramel color, cochineal extracts including carminic acid and its corresponding lake, gardenia extracts, beet extracts, and other natural colors derived from vegetable juices, and chlorophyll-containing extracts, such as nettle extract, alfalfa extract and spinach extract. Anthocyanins are another class of food grade dyes that may be used in the flavored fluids. The anthocyanins may be derived from a variety of plant sources, including fruit juices, elderberries, black currants, chokeberries, vegetable juices, black carrots, red cabbage, grapes and grape skins, and sweet potatoes. Although the relative amount of the food grade dyes used in the food grade flavored fluids may vary depending on the desired color, shade and intensity, the food grade flavored fluids, when used, will typically comprise at least about 0.01 wt. % (dsb) food grade dye, in others at least about 5.0 wt. % (dsb) food grade dye, and in yet others at least about 10.0 wt. % (dsb) food grade dye. Dyes are not required. In some embodiments, the flavored fluids comprise less than about 10.0 wt. % (dsb) food grade dye, in others less than about 7.5 wt. % food grade dye, and in yet others less than about 5.0 wt. % (dsb) food grade dyes. This includes embodiments where the food grade flavored fluids contain about 0.5 to 7.5 wt. % (dsb), and further includes embodiments where the food grade flavored fluids contain about 0.5 to 5 wt. % (dsb) food grade dye. In another embodiment, the food grade flavor fluid excludes chromic compounds comprising polymerized polyacetylenes.

Additives to flavored fluids may further include lower alcohols (i.e. alcohols having one to six carbon atoms), such as isopropanol, ethanol, *n*-butyl alcohol, and *i*-butyl alcohol, or mixtures thereof. The lower alcohols may be used as surface tension modifiers and will generally be present in amounts of no more than about 10 wt. % and more typically about 1 to 5 wt. %. This includes embodiments where the flavored fluids may contain no more that about 3 wt. % lower alcohol and further includes embodiments where the flavored fluids maybe substantially free of lower alcohol, such as isopropanol, i.e., contain no more than about 0.5 wt. % lower alcohol.

For some applications it is desirable, but not required, to exclude certain additives. For example, some food grade flavored fluids in accordance with this disclosure may be free of or substantially free of one or more of the following additives: glycol ethers, polyol monoethers, urea, tetraalkylammonium cations (e.g. tetramethylammonium cations), alkanol ammonium compounds (e.g., monoethanol ammonium compounds, diethylammonium compounds, or triethanol ammonium cations), cationic amide compounds (e.g., protonated formamide), silica, sebacyl chlorides, binding agents and film-forming agents. A food grade flavored fluid is "substantially free of" an additional food grade additive if the flavored fluid contains no more than about 0.5 wt. % of the additional food grade additive. In some instances, the food grade flavored fluid contains no more than about 0.2 wt. % of a given additive. In still other instances the food grade flavored fluid contains no more than about 0.1 wt. % of a given additive. For example, it may be desirable to have food grade flavored fluids which contain no more than about 0.05 wt. % binding agents and/or film-forming agents, such as polymers, gum arabic, hydrocolloids, xanthum gum, waxes, alginates and polysaccharides.

For ink-jet printing applications, it is generally desirable for the food grade flavor fluids to have a high degree of purity. Impurities can affect the jettability of the flavored fluids and/or the lifetimes of printer parts. Inorganic salts, such as sodium chloride and sodium sulfate, are examples of common impurities that may be particularly detrimental to flavor fluids. Fluids having elevated salt contents, whether from the flavor component or elsewhere, may be corrosive to printer parts and lead to shorter printer lifetimes. Therefore, it is typically advantageous to prepare flavored fluids having a low inorganic salt content, or at least a low chloride and/or sulfate ion content. In some exemplary embodiments, the flavored fluids contain an inorganic salt content, and more specifically in some instances a chloride and/or sulfate ion content, of no more than about 0.5 wt. %. This includes embodiments in which the flavored fluids contain an inorganic salt content, or at least a chloride and/or sulfate ion content, of no more than about 0.2 wt. % and desirably no more than about 0.1 wt. %. The salt (e.g. chloride and or sulfate ion) impurity level in the food grade flavor fluid will desirably be no more than about 1000 ppm. In some embodiments, the impurity level will be no more than about 500 ppm and in still other embodiments the impurity level will be no more than about 100 ppm. In some instances it may be possible for the flavored fluids to include higher levels of certain less corrosive salts provided the levels of chlorides and/or sulfates in the flavor fluids remains low. Thus, in certain embodiments, the inorganic salt content and impurity limits cited above may be interpreted to refer specifically to chloride and/or sulfate ion content in the flavored fluids. Other examples of detrimental impurities include surface oils, bulk oils, and suspended solids having particle diameters greater than 5 µm.

For ink-jet printing applications, it is also generally desirable for the food grade flavored fluids to have a viscosity of at least about 8 centipoise (cps), in others at least about 12 cps, and in yet other about 14 cps at the jetting temperature at which the printing is to take place. In some embodiments, the flavored fluids have a viscosity of less than about 14 cps, in others less than about 12 cps, and in yet others less than about 8 cps. This includes embodiments where the flavored fluids have a viscosity of 8 to 12 cps at the desired jetting temperature. Some ink-jet printers are designed to be operated at ambient temperatures (i.e. about 25° C). Other ink-jet printers are designed for operation at elevated print head temperatures of at least 80° C or higher. For example, an ink-jet printer may operate at jetting temperatures ranging from about 50 to 70° C. Therefore, the formulation of the flavored fluids, including the ratio of food grade glycol to glycerine and the amount of water present, is desirably controlled to provide a suitable viscosity for the intended jetting temperature. For example, a flavored fluid may be tailored to have a viscosity of about 8 to 14 cps at a jetting temperature of 60° C. However, the viscosity of these flavored fluids may be significantly higher at ambient temperatures. For example, the flavored fluids may have viscosities of about 35 to 65 cps at 25° C. Alternatively, a flavored fluid may be tailored to have a viscosity of about 8 to 14 cps at a jetting temperature of 25° C. The preferred viscosity of a flavored fluid may be dictated by the ink jet printing method. For example, flavored fluids for piezo ink jet printers typically have viscosities ranging from about 8 to 14 cps at jetting temperature. In contrast, flavored fluids for valve jet printer typically have viscosities ranging from about 1 to 5 cps at jetting temperature.

It has been discovered that food grade flavored fluids exhibiting Newtonian viscosities perform favorably as printing inks for edible substrates. Thus, in some embodiments, the flavored fluids have Newtonian viscosities. Specifically, the flavored fluids may exhibit a Brookfield viscosity that changes by no more than about 2 cps with a shear rate increase from about 15 to 45 rpm at a temperature selected from a temperature in the range of 20 to 70° C (e.g., 60° C). In some embodiments, the flavored fluids exhibit a Brookfield viscosity that changes by no more than about 1 cps and in still other embodiments, the flavored fluids exhibit a Brookfield viscosity that changes by no more than about 0.5 cps with a shear rate increase from 15 to 45 when measured at a temperature selected from a temperature in the range of 20 to 70° C (e.g., 60° C).

The surface tension of the food grade flavored fluids may vary over a relatively wide range, provided it is suitable to allow the flavored fluids to be jetted through an ink-jet printing head and printed onto the surface of an edible substrate. In some embodiments, the flavored fluids will have surface tensions of at least about 20 dynes per cm at 25° C, in others at least about 35 dynes per cm at 25° C, and in yet others at least about 60 dynes per cm at 25° C. In some embodiment, the flavored fluids will have surface tensions less than about 60 dynes per cm at 25° C, in others less than about 40 dynes per cm at 25° C, and in yet others less than about 30 dynes per cm at 25° C. This includes embodiments where the flavored fluids have surface tensions of 35 to 60 dynes per cm at 25° C and further includes embodiments where the flavored fluids have surface tensions of 28-32 dynes/cm.

To prevent clogging of ink-jet printer nozzles it is advantageous to provide food grade flavored fluids having reduced particle content. Particle content may be characterized by the silt density index (SDI) of the fluid. SDI values provide a measure of particle content that relates the rate of membrane clogging to the quantity of particulate matter present in a fluid. SDI values may be measured as follows: two aliquots of equal volume of the fluid to be tested are poured sequentially into a filter and the time required for each aliquot to pass through the filter is measured. The SDI is provided by the ratio of the time it takes the first aliquot to pass through the filter to the time it takes the second aliquot to pass through the filter. A higher SDI value indicates a fluid having a lower particle content. A fluid that has no buildup on the filter, and therefore very little particle content, will have an SDI value of 1. Unless otherwise noted, an SDI value for a given liquid sample may be measured at any arbitrary time after the sample is prepared without requiring any particular set of processing conditions to have been preformed prior to the measurement. SDI temperature accelerated conditions may be varied according to the jetting temperature and/or heat stability of the flavored component.

The food grade flavored fluids desirably have relatively low particle contents. As such, some of the flavored fluids are solutions of one or more food grade flavors that filter through a filter having a size of at least about 0.2 µm and in others at least about 1 µm. In some embodiments, the flavored fluids filter through a filter having a size less than about 5 µm. The food grade flavored fluids provided herein include fluids having an SDI of at least about 0.5. In certain embodiments the flavored fluids have an SDI of at least about 0.75. This includes embodiments where the flavored fluids have an SDI of at least about 0.9 and still further includes embodiments where the flavored fluids have an SDI of at least about 0.95.

Low specific gravity may be advantageous in some applications. In a typical embodiment, the food grade flavored fluids may have a specific gravity of no more than about 1.15. This includes embodiments where the flavored fluids have a specific gravity of no more than about 1.13 and further includes embodiments where the flavored fluids have a specific gravity of no more than about 1.10 (e.g., about 1.00 to 1.10).

The pH values of the food grade flavored fluids are not critical, however it may be advantageous to provide flavored fluids with an apparent pH of at least about 3 and desirably at least about 5 to prevent the flavored fluids from corroding printer parts. Generally, the flavored fluids include those having an apparent pH in the range of about 4 to 9. This includes flavored fluids having an apparent pH in the range of about 5 to 8. Apparent pH values may be read directly from any suitable, commercially available pH meter. Although these apparent pH values may not be interpreted as an index of hydrogen ion potential nor used in equilibrium computations, they are reproducible and useful for qualitative purposes.

Generally, the food grade flavored fluids are made by mixing all ingredients except the flavor component in a food grade container for about 30 to 60 minutes to form a solution. Mixing is generally done under ambient conditions. However, the ingredients may be heated to temperatures less than about 60°C during the mixing process. If heat is applied during mixing, the resultant solution may be cooled to ambient temperature before proceeding to the next step. In one embodiment, after mixing, the solution is passed through a filter having a size of about 0.2µm. The flavor component is added to the filtrate, preferably in a fume hood, and the filtrate and flavor component are stirred for about 30 minutes to form the flavored fluid. The flavored fluid is then passed through a filter having a size of about 0.5 µm to 1.0 µm.

The following illustrative embodiments are intended to further exemplify the food grade flavored fluids. These embodiments should not be interpreted as limiting the scope of the flavored fluids disclosed herein.

A food grade flavored fluid comprising a food grade flavor, about 25 wt. % of a food grade glycol, optionally glycerine and optionally water is provided. In this flavored fluid, the food grade glycol and any optional glycerine and water make up at least about 90 wt. % of the flavored fluid, and any water present makes up no more than about 35 wt. % of the flavored fluid.

The above-described flavored fluid may be further defined by a variety of additional ingredients, properties and range limitations to provide a number of different embodiments of the food grade flavored fluids. A few of these embodiments will now be described in more detail.

A food grade flavored fluid comprising about 0.1 to 10 wt. % food grade flavor, about 25 to 95 wt. % food grade glycol, about 1 to 50 wt. % glycerine and no more than about 35 wt. % water is provided. This flavored fluid has a viscosity of about 8 to 14 cps at 60° C.

A food grade flavored fluid comprising a food grade flavor, a food grade glycol, optionally glycerine and optionally water is provided. In this flavored fluid the food grade glycol and any optional glycerine and water comprise at least about 90 wt. % of the flavored fluid and any water present makes up no more than about 35 wt. % of the flavored fluid. The flavored fluid is characterized by a Brookfield viscosity at 60° C that changes by no more than 2 cps over a shear rate range from about 10 to 45 rpm. In one embodiment, the flavored fluid contains at least about 25 wt. % 1,2-propanediol as the food grade glycol. In another embodiment, the flavored fluid contains at least about 25% propylene glycol. The flavored fluid may have a surface tension of about 35 to 50 dynes per cm at 25° C and/or a viscosity of about 35 to 65 cps at 25° C.

A food grade flavored fluid comprising a food grade flavor and at least about 25 wt. % food grade glycol is provided. The food grade flavor in the flavored fluid has an inorganic salt content of no more than about 0.5 wt. %. The food grade flavored fluid may optionally include glycerine. In some embodiments, the flavored fluid contains at least about 70 wt. % 1,2-propanediol, glycerine or a mixture thereof. In other embodiments, the flavored fluid contains at least about 70 wt. % propylene glycol, glycerine or a mixture thereof. The flavored fluid may have a viscosity of about 35 to 65 cps at 25° C.

A food grade flavored fluid comprising at least about 40 wt. % food grade glycol is provided. The flavored fluid comprises at least about 0.1 wt. % flavor component. When glycerine is present, the flavored fluid comprises at least about 3 wt. % glycerine. In applications where it is desirable to limit the amount of water present, water may make up no more than about 20 wt. % of the flavored fluid. In other formulations, the water may account for an even smaller fraction of the flavored fluid. For example, any water present may make up no more than about 1 wt. % of the flavored fluid. A specific embodiment of the above-described flavored fluid may contain about 0.1 to 7.5 wt. % of a food grade dye. The food grade dye in the flavored fluid may be FD&C Red #3, FD&C Red #40, FD&C Yellow #5, FD&C Yellow #6, FD&C Blue #1 or a mixture thereof. The flavored fluid may include one or more synthetic food grade dyes having an inorganic salt content of no more than about 0.5 wt. %. The flavored fluid may also contain a food grade natural dye instead of or in combination with one or more synthetic dyes. The flavored fluid may have one or more the following properties: a viscosity of about 8 to 14 cps at 60° C, a surface tension of about 20 to 60 dynes per cm at 25° C, a specific gravity of no more than about 1.13, a silt density index of at least about 0.5, and a Brookfield viscosity at 60° C that changes by no more than about 2 cps over a shear rate range from about 10 to 45 rpm.

A food grade flavored fluid comprising a food grade flavor and at least about 70 wt. % food grade glycol, glycerine or a mixture thereof is provided. This flavor fluid has a viscosity of about 35 to 65 cps at 25° C. The amount of glycol (e.g., 1,2-propanediol) in the flavored fluid may be substantial. For example, the flavored fluid may contain at least about 40 wt. % glycol. This includes embodiments where the flavored fluid contains at least about 85 wt. % glycol. Glycerine may be present in the flavored fluid in amounts of about 2 to 10 wt. %. Alternatively, glycerine may be present in amounts of about 12 to 30 wt. %. The flavored fluid may further include isopropanol, ethanol or a mixture thereof. Methylparaben, propylparaben or a mixture thereof may also be present in the flavored fluid. Additionally, synthetic dyes, natural dyes, or combinations thereof may be present in the flavored fluid. In applications where a low water content is desirable, the flavored fluid may contain no more than about 20 wt. % water. This includes embodiments where the flavored fluid contains no more than about 1 wt. % water. The flavored fluid may contain one or more synthetic food grade flavors including sour flavor, strawberry flavor, vanilla flavor and balls of fire. The flavored fluid may have one or more of the following properties: a viscosity of about 8 to 14 cps at 60° C, a surface tension of about 35 to 50 dynes per cm at 25° C, a silt density index of at least about 0.5, a specific gravity of no more than about 1.13, or a specific gravity of no more than about 1.10.

A method of applying an edible flavor to a surface of an edible substrate, by ink-jet printing any one of the above-described food grade flavored fluids directly onto the surface of the edible substrate is provided. The ink-jet printing may take place at a range of jetting temperatures. For example, the ink-jet printing may take place at a jetting temperature of about 25 to 75° C. This includes methods of printing where the ink-jet printing takes place at a jetting temperature of about 50 to 70° C. One or more piezoelectric print heads may be used in the printing process.

An edible substrate having any one of the above-described food grade flavored fluids applied to one or more surfaces thereof is also provided.

### EXAMPLES

Exemplary embodiments of the present food grade flavored fluids are provided in the following examples. The following examples are presented to illustrate the present food grade flavored fluids and methods for applying the flavored fluids to edible substrates and to assist one of ordinary skill in making and using the same. The examples are not intended in any way to otherwise limit the scope of the invention.

Instrumentation and Measurements

Example 1 below provides examples of various food grade flavored fluids. The ingredients (in weight percent) and several physical characteristics of the fluids are provided in Tables 1-5. The physical characteristics presented in the tables were measured as follows. Viscosity measurements were obtained using a Brookfield Programmable LVDV II⁺Digital Calculating Viscometer and a Brookfield DV III Rheometer Model V3.3LV with ULA spindle manufactured by Brookfield Engineering Laboratories, Inc., Middleboro, Mass. Surface tension measurements were made using the DuNuoy Ring tensiometer method. The DuNuoy Ring tensiometer (Fisher Model 20 manual DuNuoy Ring Tensiometer or CSC Model 70535) may be obtained from Fisher Scientific or CSC Scientific Co., Fairfax, Va. or from companies such as Cole Palmer or VWR. Absorbance measurements were obtained with a Perkin Elmer Lambda 2 UV/Visible Spectrometer. Specific gravity was measured with a weight per gallon cup which meets ASTM methods. A weight per gallon cup accommodates 8.321 grams of water at 77.0° F ( 25° C ). The apparent pH values were read directly from an Orion Model 420A electronic pH meter with an Orion 91-55 electrode, after calibrating the instrument with appropriate buffers and immersing the electrode into the flavored fluids.

SDI measurements were obtained using a modified ASTM D4189-82 protocol for SDI of water. SDI testing is a method that relates the rate of membrane plugging or clogging to the quantity of particulate matter in the fluid. In the modified procedure, designated "Heat Test SDI" in the tables, a stainless steel filter funnel (25 mm, 50 ml bowl capacity) was placed over a 250 ml filter flask hooked up to a vacuum and a vacuum gauge. A Pall Versapor® 25 mm, 0.45 µm membrane filter disk was placed in the filter funnel and pre-moistened with a few drops of the fluid to be tested. The vacuum pressure was set to 23 in. of mercury. The fluid to be tested was heat aged for 11 days at 70° C. Heat-aging is not necessary to determine the SDI of the flavored fluids. SDI may be measured substantially immediately after the flavored fluids are prepared. In these experiments, the flavored fluids were heat-aged in order to test the shelf life of the fluids. A high SDI index after the aging process indicates that significant particle formation does not occur and indicates a long shelf life for the fluids.

After heat-aging, 20 ml of the heat-aged fluid to be tested was poured into the filter funnel and a stopwatch (with a resolution of hundredths of a second) was used to measure the time required for the fluid to pass through the filter. This time was recorded as "T₁." A 160 ml aliquot of the heat-aged fluid to be tested was then poured into the filter funnel and allowed to pass through the filter. Although the time required for this second aliquot to pass through the filter need not be recorded, it is designated "T₂." Next, a second 20 ml aliquot of the heat-aged liquid to be tested was poured into the filter funnel and the time required for the fluid to pass through the filter was measured with the stopwatch. This time was recorded as "T₃." SDI is then calculated by dividing T₁ by T₃.

### Reference Example 1

Preparation of Ink-Jettable Flavored Fluids

This example describes a method for producing non-aqueous food grade flavored fluids from food grade flavors. Seventeen illustrative fluids and flavors for these fluids are shown in Tables 1-5. The flavored fluids were prepared as follows. All ingredients, except the flavor components, were mixed together in a container approved for food use for about 30 to 60 minutes. The resultant solution was then filtered through a 0.2 µm filter. The filtrate was removed to a fume hood where the flavor component was then added. The filtrate and flavored component were stirred together for about 30 minutes to obtain the flavored fluid. The flavored fluid was then filtered with a 0.5 µm filter. The amount of each component making up the flavored fluid is given in wt. %.

**TABLE 1**

| | **SAMPLE A1** | **SAMPLE A2** | **SAMPLE B1** | **SAMPLE B2** |
|---|---|---|---|---|
| 1,2-Propanediol | 94.2 | 93.4 | 93.4 | 89.4 |
| Glycerine | 4.0 | 4.0 | 4.0 | 4.0 |
| FD&C Blue #1 | 1.6 | 1.6 | 1.6 | 1.6 |
| Balls of Fire Flavor | 0.2 | 1.0 | | |
| Vanilla Flavor | | | 1.0 | 5.0 |
| | | | | |
| pH | 5.27 | 4.69 | | 5.46 |
| Viscosity (centipoises) | 55.4 | 54.0 | | 48.4 |
| Surface Tension (dynes/cm) | 39.0 | 39.9 | | 39.9 |

**TABLE 2**

| | **SAMPLE C1** | **SAMPLE C2** | **SAMPLE C3** |
|---|---|---|---|
| 1,2-Propanediol | 93.9 | 94.2 | 93.4 |
| Glycerine | 4.0 | 4.0 | 4.0 |
| FD&C Blue #1 | 1.6 | 1.6 | 1.6 |
| Strawberry Flavor | 0.5 | 0.5 | 1.0 |
| | | | |
| pH | | | 5.38 |
| Viscosity (centipoises) | | | 53.3 |
| Surface Tension (dynes/cm) | | | 40.0 |

**TABLE 3**

| | **SAMPLE D1** | **SAMPLE D2** | **SAMPLE D3** |
|---|---|---|---|
| 1,2-Propanediol | 88.40 | 93.4 | 89.4 |
| Glycerine | 5.0 | 4.0 | 4.0 |
| FD&C Blue #1 | 1.6 | 1.6 | 1.6 |
| Sour Flavor | 5.0 | 5.0 | 20.0 |
| | | | |
| pH | 2.35 | 2.35 | 2.38 |
| Viscosity (centipoises) | 56.3 | 56.3 | 56.4 |
| Surface Tension (dynes/cm) | 40.2 | 40.2 | 41.0 |

**TABLE 4**

| | **SAMPLE E** | **SAMPLE F** | **SAMPLE G** |
|---|---|---|---|
| Propylene Glycol | 96.83 | 76.83 | 72.99 |
| Glycerine¹ | | 15.00 | 12.00 |
| 1N NaOH | 0.01 | 0.16 | |
| FD&C Blue #1 | 0.16 | 0.01 | 0.01 |
| Balls of Fire | 3.00 | | |
| Banana Type Natural Flavor | | 8.00 | |
| Coolenol Flavor | | | 15.00 |
| | | | |
| pH | 6.2 | 6.9 | 5.50 |
| Viscosity at 50°C (centipoises) | 14.00 | 14.00 | 15.80 |
| Surface Tension (dynes/cm) | 40.50 | 33.00 | 37.60 |

| | | | |
|---|---|---|---|
| ¹Glycerine is a 99.7% solution. | | | |

**TABLE 5**

| | **SAMPLE H** | **SAMPLE I** | **SAMPLE J** | **SAMPLE K** |
|---|---|---|---|---|
| 1,2-Propanediol | 83.35 | 43.7 | 36.0 | 51.4 |
| Glycerine | 5.0 | 38.0 | 8.0 | 5.0 |
| Deionized Water | | 14.0 | | 10.0 |
| 11.7N KOH | | | 2.0 | 30.0 |
| Sugar Syrup | | | | |
| Potassium Tricitrate | | | 4.0 | |
| FD&C Yellow #5 | 1.0 | | | |
| FD&C Blue #1 | 0.65 | | | 1.6 |
| FD&C Red 40 | | 1.3 | | |
| Caramel Color Liquid | | | 45.0 | |
| Sour Cream & Onion Flavor | 10.0 | | | |
| Pizza Flavor | | 3.0 | | 20.0 |
| Sausage Flavor | | | 5.0 | |
| Strawberry Flavor | | | | 2.0 |
| | | | | |
| pH | 4.14 | 3.44 | | 4.99 |
| Viscosity (centipoises) | 49.2 | 47.0 | | 64.3 |
| Surface Tension (dynes/cm) | 34.9 | 36.9 | | 47.0 |

### Example 1

Application of Food Grade Flavored Fluids to an Edible Substrate

Food grade flavored fluids can be printed through commercially available printing equipment employing printheads manufactured by manufacturers of piezo printheads such as Spectra, Xaar, Hitachi and PicoJet. When jetting Sample A1, for example, the printhead is set to 55° C. One example of a printhead which could be used for jetting these fluids is the NovaAAA jetting assembly 256/80 AQ, manufactured by Spectra. Inks successfully jet at frequencies including 1 kHz to 25kHz. Based on the printhead design and fluid ingredients, fluids may be jettable up to a frequency of 40 kHz. For highest resolution a substrate gap of 1 mm may be desirable. Substrates such as cookies, crackers, breads, marshmallows, and other edible items in a wide variety of shapes and thickness may be jetted.

Jet printing provides the ability to precisely deposit a secondary flavor or sensory experience onto an edible substrate (e.g., processed, snack, savory, sweet, candy, gum, etc.) that enhances the consumer's eating experience. This precision deposition delivers advantages other methods of flavor application do not, including specific area application, less waste and flexibility (e.g., a muti-pack of a product can house a different flavor/sensory experience with each product contained therein).

Flavored fluids can be formulated for a variety of end uses. In one embodiment, the flavored fluid imparts one or more flavors to a substrate in either a random or predetermined pattern using a printer. In another embodiment, the flavored fluid enhances the primary flavor of the edible substrate, such as printing chocolate flavor on a chocolate snack cake. In yet another embodiment, the flavored fluid provides a flavor different from the primary flavor of the edible substrate, such as printing strawberry flavor on chocolate. In a further embodiment, the flavored fluid provides surprise impact, such as printing hot or sour flavors on a salty snack.

In an additional embodiment, the flavored fluids impart a flavor image to the substrate using a printer. A flavor image combines taste appeal with visual appeal by printing flavored fluids having both a flavor component and a color component. One or more flavored fluids can be printed onto a substrate to produce a variety of images and patterns exhibiting one or more flavors and colors. The flavor component may have a direct correlation to the image, such as the image of an jalapeno pepper having a jalapeno flavor, or be completely unrelated, such as the image of a grape having a cinnamon flavor. In an embodiment of the present invention, the flavor components and color components are in separate fluids. Flavored fluids contain one or more flavor components. Colored fluids contain one or more colored components. Food grade colored fluids suitable for producing images on substrates can be found in U.S. Application Nos. 10/601,064 filed June 20, 2003, 10/918,197 filed August 13, 2004 and 11/149,665 filed June 10, 2005, each of which is hereby fully incorporated by reference. The flavor image is produced by printing at least one flavored fluid and at least one colored fluid onto a substrate either simultaneously or sequentially. When the fluids are printed sequentially, either the colored fluid or the flavored fluid may be printed first. The fluids may be printed onto the substrate in either a random or predetermined pattern using a printer.

Examples of the various embodiments include: printing sweet, sour, hot, spicy or honey flavors on a potato chip; printing strawberry, chocolate or citrus flavors on snack cakes; printing sweet, sour, cool or mint flavors on candy products; printing smoky, barbeque, spicy or wasabi on processed food products; printing a bacon flavor onto a dog treat; printing a cheese flavor onto one-half of a cracker and a garlic flavor onto the other one-half of the cracker; printing a strawberry flavor onto one-third of an ice cream bar, a chocolate flavor onto another one-third of the ice-cream bar, and a vanilla flavor onto the remaining one-third of the ice-cream bar; printing a mystery flavor (e.g., apple flavor) onto a colorless, gelatin-based roll-up; printing a strawberry flavor and the image of a strawberry onto a cookie; printing a spicy hot flavor and the image of a volcano onto a slice of bologna; printing a sour cream & onion flavor and the image of a jalapeno pepper onto a potato chip; and printing a spearmint flavor and a green leaf onto a piece of chewing gum.

In some embodiments, the flavored fluids (or flavor images) are used to enhance or alter the flavor of the edible substrate. For example, a strawberry flavor fluid is applied to a snack cake. When the consumer cats the snack cake, he senses the strawberry flavor as part of consuming the edible substrate. In other embodiments, the flavored fluids (or flavor images) are used to provide a secondary sensory experience. The consumer licks the flavored fluid (or flavor image) off the edible substrate prior to its consumption. The flavored fluid (or flavor image) provides a secondary flavor that is separate from any flavor associated with eating the substrate. In yet other embodiments, the flavored fluids (or flavor images) are used to provide a secondary flavor and enhance the flavor of the edible substrate.

### Reference Example 2

The food grade flavored fluids in Table 6 are particularly well-suited to valve jet printing methods. The amount of each component making up the flavored fluid is given in wt. %.

**TABLE 6**

| | **SAMPLE L** | **SAMPLE M** |
|---|---|---|
| Water | 50.08 | 53.75 |
| Tangerine HSE | 20 | |
| Propylene Glycol | 16.32 | 20 |
| Citric Acid Powder | 10.16 | 15 |
| Sucrose | 3.04 | 10 |
| Acesulfame Potassium (ACE K) | 0.2 | 1.0 |
| Sodium Benzoate | 0.2 | 0.25 |

### Reference Example 3

Another food grade flavored fluid with potential applicability to valve jet printing comprises 57.25 wt. % water, 25 wt. % propylene glycol, 12.5 wt. % citric acid, 5.0 wt. % sucralose, and 0.25 wt. % sodium benzoate.

The invention has been described with reference to very specific and illustrative embodiments. However, it should be understood that many variations and modifications may be made while remaining within the scope of the invention as defined in the appended claims.

## Claims

1. A method of applying an edible flavor image to an edible substrate comprising ink jet printing a food grade flavored fluid and a separate food grade colored fluid onto an edible substrate to create an edible flavor image thereon.

2. The method of claim 1, wherein the food grade flavored fluid and food grade colored fluid are printed simultaneously onto the edible substrate.

3. The method of claim 1, wherein the food grade flavored fluid and food grade colored fluid are printed sequentially onto the edible substrate.

4. The method of claim 1, wherein the food grade flavor correlates with the edible flavor image.

5. The method of claim 1, wherein the food grade flavor does not correlate with the edible flavor image.

6. The method of claim 1, wherein the food grade colored fluid comprises no more than about 1000 ppm of at least one of a chloride ion or a sulfate ion.

7. The method of claim 1, wherein the food grade flavored fluid has a viscosity of about 8 to 14 cps at jetting temperature.

8. The method of claim 1, wherein the food grade flavored fluid has a viscosity of about 1 to 5 cps at jetting temperature.

9. The method of claim 1, wherein the food grade flavored fluid has a surface tension of about 20 dynes per cm to about 60 dynes per cm at 25° C.

10. The method of claim 1, wherein the edible substrate comprises at least one of snack chips, fabricated snacks, extruded snacks, cookies, cakes, chewing gum, candy, various bread products, fruit, dried fruit, beef jerky, crackers, pasta, hot dogs, sliced meats, cheese, pancakes, waffles, dried fruit film, breakfast cereals, toaster pastries, ice cream cones, ice cream, gelatin, ice cream sandwiches, ice pops, yogurt, desserts, cheese cake, pies, cup cakes, English muffins, pizza, pies, meat patties, and fish sticks.

11. The method of claim 1, wherein the edible substrate excludes edible films.

12. The method of claim 1, wherein the food grade flavor fluid comprises a food grade glycol.

13. The method of claim 1, wherein the food grade flavor fluid excludes chromic compounds comprising polymerized polyacetylenes.

14. The method of claim 1, wherein the food grade favoured fluid is designed to be licked by a consumer before the edible substrate is consumed by the consumer

## Patentansprüche

1. Methode zum Aufdrucken eines essbaren Geschmacksbilds auf ein essbares Substrat, umfassend das Tintenstrahldrucken eines Geschmacksfluids von Nahrungsmittelqualität und eines getrennten Farbfluids von Nahrungsmittelqualität auf ein essbares Substrat, um ein essbares Geschmacksbild darauf zu bilden.

2. Methode nach Anspruch 1, wobei das Geschmacksfluid von Nahrungsmittelqualität und das getrennte Farbfluid von Nahrungsmittelqualität gleichzeitig aufdas essbare Substrat aufgedruckt werden.

3. Methode nach Anspruch 1, wobei das Geschmacksfluid von Nahrungsmittelqualität und das getrennte Farbfluid von Nahrungsmittelqualität sequentiell auf das essbare Substrat aufgedruckt werden.

4. Methode nach Anspruch 1, wobei das Geschmacksmittel von Nahrungsmittelqualität mit dem essbaren Geschmacksbild korreliert.

5. Methode nach Anspruch 1, wobei das Geschmacksmittel von Nahrungsmittelqualität nicht mit dem essbaren Geschmacksbild korreliert.

6. Methode nach Anspruch 1, wobei das Farbfluid von Nahrungsmittelqualität nicht mehr als etwa 1000 ppm mindestens eines von einem Chloridion oder einem Sulfation umfasst.

7. Methode nach Anspruch 1, wobei das Geschmacksfluid von Nahrungsmittelqualität eine Viskosität von etwa 8 bis 14 cPs bei der Ausströmtemperatur aufweist.

8. Methode nach Anspruch 1, wobei das Geschmacksfluid von Nahrungsmittelqualität eine Viskosität von etwa 1 bis 5 cPs bei der Ausströmtemperatur aufweist.

9. Methode nach Anspruch 1, wobei das Geschmacksfluid von Nahrungsmittelqualität eine Oberflächenspannung von etwa 20 dyn pro cm bis etwa 60 dyn pro cm bei 25 °C aufweist.

10. Methode nach Anspruch 1, wobei das essbare Substrat mindestens eines von Snack-Chips, industriell hergestellten Snacks, extrudierten Snacks, Keksen, Kuchen, Kaugummi, Bonbons, verschiedenen Brotprodukten, Obst, Trockenobst, Trockenfleisch, Crackern, Teigwaren, heißen Würstchen, Scheibenfleisch, Käse, Pfannkuchen, Waffeln, Trockenobstfilm, Frühstückscerealien, Toastgebäck, Speiseeistüten, Speiseeis, Gelatine, Eiseremsandwichen, Wassereis, Joghurt, Desserts, Käsekuchen, Pasteten, Kuchengebäck, englischen Muffins, Pizza, Pasteten, Fleischküchel und Fischstäbchen umfasst.

11. Methode nach Anspruch 1, wobei bei dem essbaren Substrat essbare Filme ausgeschlossen sind.

12. Methode nach Anspruch 1, wobei das Geschmacksfluid von Nahrungsmittelqualität ein Glykol von Nahrungsmittelqualität umfasst.

13. Methode nach Anspruch 1, wobei bei dem Geschmacksfluid von Nahrungsmittelqualität Chromverbindungen umfassend polymerisierte Polyacetylene ausgeschlossen sind.

14. Methode nach Anspruch 1, wobei das Geschmacksfluid von Nahrungsmittelqualität konzipiert ist, um von einem Konsumenten abgeschleckt zu werden, bevor das essbare Substrat vom Konsument konsumiert wird.

## Revendications

1. Procédé pour l'application d'une image d'arôme comestible sur un substrat comestible comprenant l'impression par jet d'encre d'un fluide aromatisé de qualité alimentaire et d'un fluide coloré de qualité alimentaire séparé sur un substrat comestible pour créer une image d'arôme comestible sur celui-ci.

2. Procédé selon la revendication 1, dans lequel le fluide aromatisé de qualité alimentaire et le fluide coloré de qualité alimentaire sont imprimés simultanément sur le substrat comestible.

3. Procédé selon la revendication 1, dans lequel le fluide aromatisé de qualité alimentaire et le fluide coloré de qualité alimentaire sont imprimés séquentiellement sur le substrat comestible.

4. Procédé selon la revendication 1, dans lequel l'arôme de qualité alimentaire est en corrélation avec l'image d'arôme comestible.

5. Procédé selon la revendication 1, dans lequel l'arôme de qualité alimentaire n'est pas en corrélation avec l'image d'arôme comestible.

6. Procédé selon la revendication 1, dans lequel le fluide coloré de qualité alimentaire ne comprend pas plus d'environ 1000 ppm d'au moins un parmi un ion chlorure ou un ion sulfate.

7. Procédé selon la revendication 1, dans lequel le fluide aromatisé de qualité alimentaire possède une viscosité d'environ 8 à 14 cps à la température d'éjection.

8. Procédé selon la revendication 1, dans lequel le fluide aromatisé de qualité alimentaire possède une viscosité d'environ 1 à 5 cps à la température d'éjection.

9. Procédé selon la revendication 1, dans lequel le fluide aromatisé de qualité alimentaire possède une tension de surface d'environ 20 dynes par cm à environ 60 dynes par cm à 25°C.

10. Procédé selon la revendication 1, dans lequel le substrat comestible comprend au moins un parmi des frites de snack, des casse-croûtes fabriqués, des casse-croûtes extrudés, des biscuits, des gâteaux, un chewing-gum, un bonbon, divers produits panifiés, un fruit, un fruit séché, un charqui de boeuf, des crackers, des pâtes, des hot-dogs, des viandes en tranches, un fromage, des pancakes, des gaufres, un film de fruit séché, des céréales pour le petit-déjeuner, des pâtes pour grill, des cornets de crème glacée, une crème glacée, une gélatine, des sandwichs glacés, des boissons gazeuses glacées, un yogourt, des desserts, un gâteau au fromage, des tartes, des petits gâteaux, des muffins anglais, une pizza, des tartes, des galettes de viande hachée et des bâtonnets de poisson.

11. Procédé selon la revendication 1, dans lequel le substrat comestible exclut des films comestibles.

12. Procédé selon la revendication 1, dans lequel le fluide aromatisé de qualité alimentaire comprend un glycol de qualité alimentaire.

13. Procédé selon la revendication 1, dans lequel le fluide aromatisé de qualité alimentaire exclut des composés chromiques comprenant des polyacétylènes polymérisés.

14. Procédé selon la revendication 1, dans lequel le fluide aromatisé de qualité alimentaire est conçu pour être léché par un consommateur avant que le substrat comestible soit consommé par le consommateur.
